# EUROPEAN PATENT APPLICATION

(11) **EP 4 716 355 A1**
(43) Date of publication of application: **25.03.2026**
(21) Application number: 24830549.2
(22) Date of filing: 17.06.2024
(51) Int. Cl.: H04W 74/08

(54) **COMMUNICATION METHOD AND APPARATUS**

(30) Priority: 28.06.2023 CN 202310781526
(71) Applicant: Huawei Technologies Co., Ltd., Shenzhen, Guangdong 518129 (CN)
(72) Inventor: LI, Yunbo, Shenzhen, Guangdong 518129 (CN); GUO, Yuchen, Shenzhen, Guangdong 518129 (CN)
(74) Representative: Pfenning, Meinig & Partner mbB
(86) International application number: PCT/CN2024/099653
(87) International publication number: WO 2025/001903

(57) **Abstract**

A communication method and apparatus are applied to a wireless local area network system supporting 802.11 series protocols such as a next-generation Wi-Fi protocol of IEEE 802.11ax like 802.11be, Wi-Fi 7, or EHT, and Wi-Fi 8. The method includes: When a first condition is met, a first station sets an end time of a first TXOP to be later than a start time of a second SP of a second R-TWT. The first condition includes: The first station is a member of a first R-TWT, the first TXOP is located in a first SP of the first R-TWT, the start time of the second SP is located in the first SP, and a remaining portion of the first TXOP located after the start time of the second SP is used to transmit an uplink frame of an R-TWT uplink traffic identifier of the first R-TWT. The first station does not need to end the first TXOP in advance. Therefore, impact on a transmitted service is avoided, a service latency is reduced, and system efficiency is improved.

## Description

### CROSS-REFERENCE TO RELATED APPLICATIONS

This application claims priority to Chinese Patent Application No. 202310781526.7, filed with the China National Intellectual Property Administration on June 28, 2023, and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Many wireless devices (especially terminal devices) are powered by batteries. Therefore, power-saving features are particularly important. The Institute of Electrical and Electronics Engineers (institute of electrical and electronics engineers, IEEE) 802.11ah introduces a target wakeup time (target wakeup time, TWT) technology in the Internet of Things (Internet of Things, loT) field. A TWT requesting station may keep asleep at a time beyond a TWT service period (TWT service period, TWT SP) to reduce power consumption. The standard protocol IEEE 802.11 ax extends the TWT to the broadband field. In one case, a non access point station (non access point station, non-AP STA) may negotiate a TWT SP with an access point (access point, AP), which is referred to as a unicast TWT (individual TWT). In another case, an AP may include one or more broadcast TWT (broadcast TWT) identifiers into a frame such as a beacon (beacon) frame through scheduling, where each broadcast TWT corresponds to one or more broadcast TWT service periods (broadcast TWT SPs); and a non-AP STA may request to join one or more broadcast TWTs (broadcast TWTs), to maintain power saving at a time beyond the joined broadcast TWT SP.

Currently, more wireless network applications and services, such as online games, virtual reality, and industrial field, impose relatively strict requirements on latency features. Therefore, the next-generation wireless local area network (wireless local area network, WLAN) IEEE 802.11be standard, using assurance of latency and latency jitter features as a key technical objective, has gained wide attention in the industry. Based on this, IEEE 802.11be proposes a restricted target wakeup time (restricted target wakeup time, R-TWT) technology to improve latency assurance performance. The R-TWT technology is a mechanism derived from the broadcast TWT introduced in IEEE 802.11ax, designed to ensure low-latency services.

However, in the R-TWT technology, a non-AP EHT STA supporting an R-TWT is required to end a transmission opportunity (transmission opportunity, TXOP) of the non-AP EHT STA before a start time of any active R-TWT SP advertised by an associated AP. This is not conducive to reducing a latency, but increases the latency.

### SUMMARY

This application provides a communication method and apparatus to reduce a service latency and improve system efficiency in an R-TWT technology.

According to a first aspect, this application provides a communication method. The method may be applied to a first station, or a processor, a chip, a functional module, or the like in a first station. The method may include: The first station obtains a first transmission opportunity TXOP; and when a first condition is met, the first station sets an end time of the first TXOP to be later than a start time of a second service period SP of a second restricted target wakeup time R-TWT. The first condition includes: The first station is a member of a first R-TWT, the first TXOP is located in a first SP of the first R-TWT, the start time of the second SP of the second R-TWT is located in the first SP of the first R-TWT, and a remaining portion of the first TXOP located after the start time of the second SP is used to transmit an uplink frame of an R-TWT uplink traffic identifier of the first R-TWT. The first R-TWT and the second R-TWT are released by an access point associated with the first station or an access point corresponding to a transmitted BSSID, and the access point corresponding to the transmitted BSSID and the access point associated with the first station belong to a same multiple basic service set identifier BSSID.

According to the method provided in this application, in a process in which the first station obtains the first TXOP in the first SP of the first R-TWT and transmits service data by using the first TXOP, when the first condition is met, the first station does not need to end the first TXOP (that is, stop transmitting the service data) before the start time of the second SP. Therefore, impact on a service transmitted by the first station can be avoided, a service latency of the first station is reduced, a low-latency service is guaranteed better, and system efficiency is improved.

In a possible implementation, when the first condition is not met, the first station sets the end time of the first TXOP to be earlier than the start time of the second SP of the second R-TWT.

According to a second aspect, this application provides a communication method. The method may be applied to a first station, or a processor, a chip, a functional module, or the like in a first station. The method may include: The first station schedules a to-be-sent first frame; and when frame exchange of the first frame cannot be completed before a start time of a second SP of a second R-TWT, and a second condition is not met, the first station defers sending of the first frame. The second condition includes: The first station is a member of a first R-TWT, a first time is located in a first service period SP of the first R-TWT, the start time of the second SP is located in the first SP, and the first frame is an uplink frame of an R-TWT uplink traffic identifier of the first R-TWT. The first R-TWT and the second R-TWT are released by an access point associated with the first station or an access point corresponding to a transmitted BSSID, and the access point corresponding to the transmitted BSSID and the access point associated with the first station belong to a same multiple basic service set identifier BSSID.

According to the method provided in this application, when the frame exchange of the first frame cannot be completed before the start time of the second SP of the second R-TWT, and the second condition is not met, the first station defers transmission of the first frame before transmitting the first frame. Therefore, impact on a service transmitted in the second SP of the second R-TWT can be avoided, a low-latency service is guaranteed better, and system efficiency is improved.

In a possible implementation, when the frame exchange of the first frame cannot be completed before the start time of the second SP of the second R-TWT, and the second condition is met, the first station sends the first frame.

According to a third aspect, this application provides a communication method. The method may be applied to a first station, or a processor, a chip, a functional module, or the like in a first station. The method may include: The first station schedules a to-be-sent first frame; and when a second condition is met, the first station sends the first frame. The second condition includes: The first station is a member of a first R-TWT, a first time is located in a first service period SP of the first R-TWT, a start time of a second SP is located in the first SP, and the first frame is an uplink frame of an R-TWT uplink traffic identifier of the first R-TWT.

According to the method provided in this application, the first station can transmit the first frame provided that the second condition is met. Although frame exchange may not be completed from the first time to the start time of the second SP of the second R-TWT when the second condition is met, the first station does not need to defer transmission of the first frame. Therefore, impact on a service transmitted by the first station can be avoided, a service latency of the first station is reduced, a low-latency service is guaranteed better, and system efficiency is improved.

In a possible implementation, when the second condition is not met, if a fifth condition is met, the first station sends the first frame. The fifth condition includes: The frame exchange of the first frame can be completed before the start time of the second SP of the second R-TWT, the first time is located in the first service period SP of the first R-TWT, and the start time of the second SP is located in the first SP.

In a possible implementation, when the second condition is not met and the fifth condition is not met, the first station defers sending of the first frame.

According to a fourth aspect, this application provides a communication method. The method may be applied to a first access point, or a processor, a chip, a functional module, or the like in a first access point. The method may include: The first access point obtains a first transmission opportunity TXOP; and when a third condition is met, the first access point sets an end time of the first TXOP to be later than a start time of a second service period SP of a second restricted target wakeup time R-TWT. The third condition includes: The first TXOP is located in a first SP of a first R-TWT, the start time of the second SP of the second R-TWT is located in the first SP of the first R-TWT, and a remaining portion of the first TXOP located after the start time of the second SP is used to transmit a downlink frame of an R-TWT downlink traffic identifier of the first R-TWT or request an uplink frame of an R-TWT uplink traffic identifier of the first R-TWT. The first R-TWT and the second R-TWT are released by the first access point or an access point corresponding to a transmitted BSSID, and the access point corresponding to the transmitted BSSID and the first access point belong to a same multiple basic service set identifier BSSID.

According to the method provided in this application, in a process in which the first access point obtains the first TXOP in the first SP of the first R-TWT and transmits service data by using the first TXOP, when the third condition is met, the first access point does not need to end the first TXOP (that is, stop transmitting the service data) before the start time of the second SP. Therefore, impact on a service transmitted by the first access point can be avoided, a service latency of the first access point is reduced, a low-latency service is guaranteed better, and system efficiency is improved.

In a possible implementation, when the third condition is not met, the first access point sets the end time of the first TXOP to be earlier than the start time of the second SP of the second R-TWT.

According to a fifth aspect, this application provides a communication method. The method may be applied to a first access point, or a processor, a chip, a functional module, or the like in a first access point. The method may include: The first access point schedules a to-be-transmitted first frame; and when frame exchange of the first frame cannot be completed before a start time of a second SP of a second R-TWT, and a fourth condition is not met, the first station defers transmission of the first frame.

The fourth condition includes: A first time is located in a first service period SP of a first R-TWT, the start time of the second SP of the second R-TWT is located in the first SP of the first R-TWT, and the first frame is an uplink frame of an R-TWT uplink traffic identifier of the first R-TWT, or the first frame is a downlink frame of an R-TWT downlink traffic identifier of the first R-TWT. The first R-TWT and the second R-TWT are released by the first access point or an access point corresponding to a transmitted BSSID, and the access point corresponding to the transmitted BSSID and the first access point belong to a same multiple basic service set identifier BSSID.

According to the method provided in this application, when the frame exchange of the first frame cannot be completed before the start time of the second SP of the second R-TWT, and the fourth condition is not met, the first access point defers transmission of the first frame before transmitting the first frame. Therefore, impact on a service transmitted in the second SP of the second R-TWT can be avoided, a low-latency service is guaranteed better, and system efficiency is improved.

In a possible implementation, when the frame exchange of the first frame cannot be completed before the start time of the second SP of the second R-TWT, and the fourth condition is not met, the first access point transmits the first frame.

According to a sixth aspect, this application provides a communication method. The method may be applied to a first access point, or a processor, a chip, a functional module, or the like in a first access point. The method may include: The first access point schedules a to-be-sent first frame; and when a fourth condition is met, the first access point sends the first frame. The fourth condition includes: A first time is located in a first service period SP of a first R-TWT, a start time of a second SP of a second R-TWT is located in the first SP of the first R-TWT, and the first frame is an uplink frame of an R-TWT uplink traffic identifier of the first R-TWT, or the first frame is a downlink frame of an R-TWT downlink traffic identifier of the first R-TWT. The first R-TWT and the second R-TWT are released by the first access point or an access point corresponding to a transmitted BSSID, and the access point corresponding to the transmitted BSSID and the first access point belong to a same multiple basic service set identifier BSSID.

According to the method provided in this application, before transmitting the first frame at the first time, the first access point can transmit the first frame as long as the fourth condition is met. Although frame exchange may not be completed from the first time to the start time of the second SP of the second R-TWT when a fifth condition is met, the first access point does not need to defer transmission of the first frame. Therefore, impact on a service transmitted by a first station can be avoided, a service latency of the first access point is reduced, a low-latency service is guaranteed better, and system efficiency is improved.

In a possible implementation, when the fourth condition is not met, if a sixth condition is met, the first access point sends the first frame. The sixth condition includes: The frame exchange of the first frame can be completed before the start time of the second SP of the second R-TWT, the first time is located in the first service period SP of the first R-TWT, and the start time of the second SP is located in the first SP.

In a possible implementation, when the fourth condition is not met and the sixth condition is not met, the first access point defers sending of the first frame.

According to a seventh aspect, this application further provides a communication apparatus. The communication apparatus can implement any method provided in any one of the first aspect to the sixth aspect. The communication apparatus may be implemented by hardware, or may be implemented by hardware by executing corresponding software. The hardware or software includes one or more units or modules corresponding to the foregoing function.

In a possible implementation, the communications apparatus includes a processor. The processor is configured to support the communication apparatus in performing a corresponding function of the first station or the first access point in the foregoing method. The communication apparatus may further include a memory. The memory may be coupled to the processor. The memory stores program instructions and data that are necessary for the communication apparatus. Optionally, the communication apparatus further includes an interface circuit. The interface circuit is configured to support communication between the communication apparatus and a device such as a terminal apparatus.

In a possible implementation, the communication apparatus includes corresponding functional modules, respectively configured to implement the steps in the foregoing method. The function may be implemented by hardware, or may be implemented by hardware by executing corresponding software. The hardware or software includes one or more modules corresponding to the foregoing function.

In a possible implementation, a structure of the communication apparatus includes a processing unit and a communication unit. These units may perform corresponding functions in the foregoing method examples. For details, refer to descriptions in the method provided in any one of the first aspect to the sixth aspect. Details are not described herein again.

According to an eighth aspect, a communication apparatus is provided and includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the possible implementations of the first aspect to the sixth aspect by using a logic circuit or by executing code instructions.

According to a ninth aspect, a computer program product storing instructions is provided and includes computer program code or instructions. When the computer program code or the instructions are run on a computer, the method in any one of the possible implementations of the first aspect to the sixth aspect is performed.

According to a tenth aspect, a circuit is provided. The circuit is configured to perform the method in any one of the possible implementations of the first aspect to the sixth aspect. The circuit may include a chip circuit. Optionally, the circuit may be further coupled to a memory.

According to an eleventh aspect, a chip is provided. The chip includes a processor, configured to implement the method in any one of the possible implementations of the first aspect to the sixth aspect. Optionally, the chip may further include a memory. The chip may include a chip, or may include a chip and another discrete component.

According to a twelfth aspect, an embodiment of this application provides a communication system. The communication system may include a first station and a first access point. The first station is configured to implement the method in the first aspect, the second aspect, or the third aspect, and any possible implementation thereof. The first access point is configured to implement the method in the fourth aspect, the fifth aspect, or the sixth aspect, and any possible implementationthereof.

According to a thirteenth aspect, a communication apparatus is provided and includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the functional modules of the method in any one of the possible implementations of the first aspect to the sixth aspect by using a logic circuit or by executing code instructions.

According to a fourteenth aspect, a computer-readable storage medium is provided. The computer-readable storage medium stores a computer program or instructions. When the computer program or the instructions are executed by a processor, the method in any possible implementation of any one of the first aspect to the sixth aspect is implemented. The computer-readable storage medium stores program instructions. When the program instructions are run on a computer, the computer is enabled to perform the method in the first aspect and any possible design of the first aspect, or the second aspect and any possible design of the second aspect, or the third aspect and any possible design of the third aspect, or the fourth aspect and any possible design of the fourth aspect of embodiments of this application. For example, the computer-readable storage medium may be any usable medium that can be accessed by the computer. As an example rather than a limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

### BRIEF DESCRIPTION OF DRAWINGS

FIG. 1 is a diagram of an architecture of a communication system according to this application;
FIG. 2 is a diagram of a specific structure of an AP or a STA according to this application;
FIG. 3 is a diagram of an R-TWT mechanism according to this application;
FIG. 4 is a diagram of a frame format according to this application;
FIG. 5 is a diagram of an R-TWT mechanism according to an embodiment of this application;
FIG. 6 is a schematic flowchart of a communication method according to an embodiment of this application;
FIG. 7 is a diagram of an R-TWT mechanism according to an embodiment of this application;
FIG. 8 is a schematic flowchart of a communication method according to an embodiment of this application;
FIG. 9 is a schematic flowchart of a communication method according to an embodiment of this application;
FIG. 10 is a schematic flowchart of a communication method according to an embodiment of this application;
FIG. 11 is a diagram of a structure of a communication apparatus according to an embodiment of this application; and
FIG. 12 is a diagram of a structure of a communication apparatus according to an embodiment of this application.

### DESCRIPTION OF EMBODIMENTS

The following further describes this application in detail with reference to the accompanying drawings.

The method and the apparatus in this application are based on a same technical concept. Because problem-resolving principles of the method and the apparatus are similar, mutual reference may be made to implementations of the apparatus and the method, and repeated parts are not described.

In the description of this application, "at least one (type)" means one (type) or more (types), and "a plurality of (types)" means two (types) or more (types). "At least one of the following items" or a similar expression thereof means any combination of these items, including any combination of singular items or plural items. For example, at least one of a, b, or c may indicate a, b, c, a and b, a and c, b and c, or a, b, and c, where a, b, and c may be singular or plural.

The communication method provided in this application may be applied to various communication systems. For example, the communication method provided in this application may be applied to a wireless local area network (wireless local area network, WLAN) scenario, for example, may be applied to IEEE 802.11 series standards, for example, the 802.11a/b/g standard, the 802.11n standard, the 802.11ac standard, the 802.11ax standard, or a next generation of the 802.11ax standard, for example, the 802.11be standard, wireless fidelity (wireless fidelity, Wi-Fi) 7, or extremely high throughput (extremely high throughput, EHT), or for another example, a next generation of 802.11be, Wi-Fi 8, or an even further next generation standard. This application may be further applied to an ultra wideband (ultra wideband, UWB)-based wireless personal area network system and a sensing (sensing) system. Embodiments of this application may be further applied to a wireless local area network system, such as an Internet of Things (Internet of Things, IoT) network or a vehicle-to-everything (vehicle to X, V2X) network. Certainly, embodiments of this application may be further applied to other possible communication systems, for example, a long term evolution (long term evolution, LTE) system, a universal mobile telecommunications system (universal mobile telecommunications system, UMTS), a 5th generation (5th generation, 5G) communication system, and a future 6th generation (6th generation, 6G) communication system.

Although embodiments of this application are mainly described by using a WLAN network, and in particular, a network to which IEEE 802.11 system standards are applied as an example, a person skilled in the art easily understands that various aspects of this application may be extended to other networks using various standards or protocols, for example, Bluetooth (Bluetooth), a high performance radio local area network (high performance radio local area network, HIPERLAN) (a wireless standard similar to the IEEE 802.11 standard, mainly used in Europe), a wide area network (wide area network, WAN), a personal area network (personal area network, PAN), or other networks currently known or developed in the future. Therefore, regardless of used coverage and a used wireless access protocol, various aspects provided in this application are applicable to any appropriate wireless network.

The communication systems to which this application is applicable are merely examples for description, and are not limited herein. Unified descriptions are provided herein, and are not described below again.

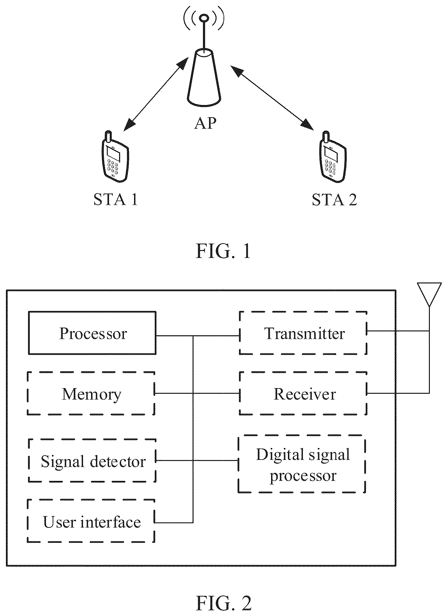

For example, FIG. 1 shows a possible architecture of a communication system to which the communication method provided in this application is applicable. The architecture of the communication system may include at least one access point (access point, AP) (for example, the AP in FIG. 1) and at least one station (station, STA) (for example, a STA 1 and a STA 2 in FIG. 1).

The access point may be an access point used by a terminal device (such as a mobile phone) to access a wired (or wireless) network, and is mainly deployed at home, in a building, and in a park. A typical coverage radius is tens of meters to a hundred meters. Certainly, the access point may alternatively be deployed outdoors. The access point is equivalent to a bridge that connects a wired network and a wireless network, and is mainly used to connect various wireless network clients together and then connect the wireless network to an Ethernet. Specifically, the access point may be a terminal device (such as a mobile phone) or a network device (such as a router) with a Wi-Fi chip. The access point may be a device that supports the 802.11be standard. The access point may alternatively be a device that supports a plurality of wireless local area network (wireless local area networks, WLAN) standards of the 802.11 family, such as 802.11ax, 802.11ac, 802.11n, 802.11g, 802.11b, 802.11a, 802.11be, Wi-Fi 7, Wi-Fi 8, or a next generation thereof. The access point in this application may be a high-efficiency (high-efficiency, HE) AP, an extremely high throughput (extremely high throughput, EHT) AP, or an access point applicable to a future generation Wi-Fi standard.

The station may be a wireless communication chip, a wireless sensor, a wireless communication terminal, or the like, and may also be referred to as a user. For example, the station may be a mobile phone, a tablet computer, a set-top box, a smart television set, a smart wearable device, a vehicle-mounted communication device, a computer, or the like that supports a Wi-Fi communication function. Optionally, the station may support the 802.11be standard. The station may also support a plurality of wireless local area network (wireless local area networks, WLAN) standards of the 802.11 family, such as 802.11ax, 802.11ac, 802.11n, 802.11g, 802.11b, 802.11a, 802.11be, Wi-Fi 7, Wi-Fi 8, or a next generation thereof.

The access point in this application may be a high-efficiency (high-efficiency, HE) STA, an extremely high throughput (extremely high throughput, EHT) STA, or a STA applicable to a future generation Wi-Fi standard.

For example, the access point and the station may be devices used in an Internet of Vehicles, Internet of Things nodes, sensors, or the like in an Internet of Things (Internet of Things, IoT), smart cameras, smart remote controls, smart water or electricity meters, or the like in a smart home, or sensors in a smart city.

For example, a specific structure of the AP or the STA may be shown in a structural diagram shown in FIG. 2, and may include a processor. Optionally, the specific structure of the AP or the STA may further include one or more of the following: a memory, a transmitter, a receiver, a signal detector, or a digital signal processor, and optionally, may further include a user interface. Alternatively, the transmitter and the receiver may be combined into a transceiver. This is not limited in this application.

It should be noted that a name of a device shown in FIG. 1 is merely an example, and there may be another name in a future communication system. A quantity of devices in FIG. 1 is also merely an example, and more or fewer devices may be included. This is not limited in this application.

The communication method provided in this application is applicable to data communication between an AP and one or more STAs, or applicable to communication between APs, or applicable to communication between STAs. This is not limited in this application.

The following first briefly describes some technologies used in embodiments of this application.

### 1. Next-generation wireless local area network (wireless local area network, WLAN) standards:

The WLAN has evolved through standards such as IEEE 802.11a/b/g/n/ac/ax, to 802.11be that is currently under discussion, and standard versions thereof continue to evolve and develop. The 802.11n standard may also be referred to as high throughput (high throughput, HT), the 802.11ac standard may also be referred to as very high throughput (very high throughput, VHT), the 802.11 ax standard may also be referred to as high efficiency (high efficiency, HE), and the 802.11be standard may also be referred to as extremely high throughput (extremely high throughput, EHT). The standards before HT, such as 802.11a/b/g, are collectively referred to as non-high throughput (non-HT).

### 2. Target wakeup time (target wakeup time, TWT):

Many wireless devices (especially terminal devices) are powered by batteries. Therefore, power-saving features are particularly important. IEEE 802.11ah first introduces a concept of TWT in the IoT field. A TWT requesting STA (TWT requesting STA) may negotiate a TWT service period (TWT service period, TWT SP, or SP for short) with another TWT responding STA (TWT responding STA), so that the TWT requesting STA can keep asleep at a time beyond the TWT SP, thereby saving power.

IEEE 802.11ax extends the TWT to the broadband field. A non-access point station (non-AP STA) may negotiate a TWT SP with an AP, which is referred to as a unicast TWT (individual TWT). The unicast TWT may be uniquely determined based on a media access control (media access control, MAC) address of a TWT requesting STA and a TWT flow identifier (TWT flow identifier).

In addition, IEEE 802.11ax also allows an AP (referred to as a TWT scheduling AP (TWT scheduling AP)) to include one or more broadcast TWTs (broadcast TWTs) into a frame such as a beacon (beacon) frame through scheduling. Each broadcast TWT (broadcast TWT) corresponds to one or more broadcast TWT service periods (broadcast TWT SPs), and a non-AP STA (referred to as a TWT scheduled STA (TWT scheduled STA)) may request to join one or more broadcast TWTs, to maintain power saving at a time beyond the joined broadcast TWT SP. The broadcast TWT may be uniquely determined based on a MAC address of the TWT scheduling AP and a broadcast TWT identifier (broadcast TWT ID).

### 3. Restricted target wakeup time (restricted target wakeup time, R-TWT):

Currently, more wireless network applications and services, such as online games, virtual reality, and industrial automation, impose relatively strict requirements on latency features. Therefore, the next-generation WLAN IEEE 802.11be standard, using assurance of latency and latency jitter features as a key technical objective, has gained wide attention in the industry. IEEE 802.11be plans to introduce an R-TWT technology to improve latency assurance performance.

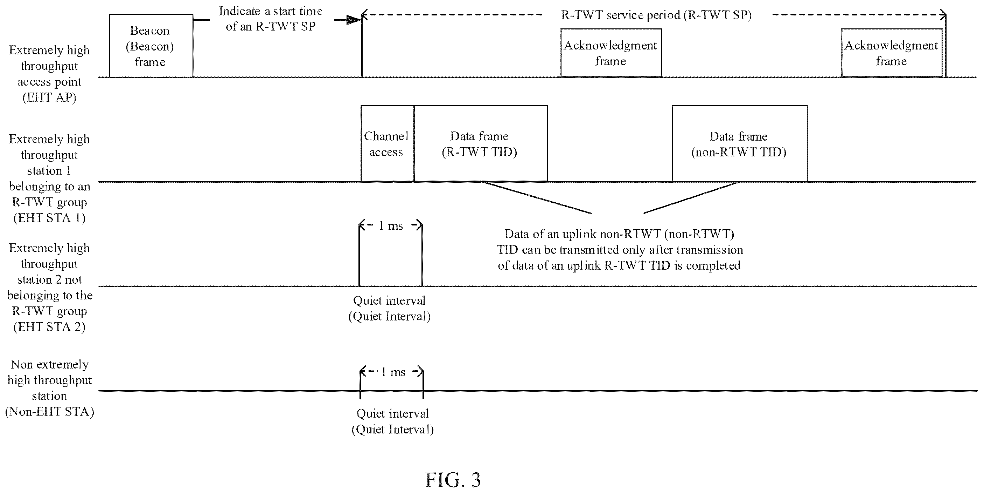

As shown in FIG. 3, an R-TWT mechanism is a new mechanism derived from the broadcast TWT introduced in IEEE 802.11ax, designed to ensure low-latency services. In the 802.11be standard, a non-AP EHT STA (hereinafter referred to as an EHT STA) has many real-time applications (real time applications, RTAs), and traffic of these applications has very stringent latency requirements (stringent latency requirements). Based on this, the R-TWT mechanism is proposed.

After an EHT STA in a basic service set (basic service set, BSS) receives any R-TWT SP information broadcast by an AP, if dot11R-TWTOptionImplemented (dot11RestrictedTWTOptionlmplemented) of the EHT STA is set to true (true), the EHT STA needs to end a transmission opportunity (transmission opportunity, TXOP) of the EHT STA before a start time of an R-TWT SP. In addition, in a beacon (beacon) frame or a response (probe response) frame, the AP may set a quiet interval (quiet interval) aligned with the start time of the R-TWT SP, and duration may be 1 millisecond (ms). The duration of the quiet interval is generally less than duration of the R-TWT SP. An EHT STA belonging to an R-TWT SP group (grouped by broadcast TWT ID) is referred to as an R-TWT scheduled STA (R-TWT scheduled STA), and it is specified that the R-TWT scheduled STA may ignore the foregoing quiet interval, and contend for a channel after the R-TWT SP starts. Other legacy stations (legacy STAs) and other EHT STAs need to keep quiet based on the quiet interval. This reduces a quantity of STAs contending for a channel in the BSS, and increases a probability that an EHT STA having a low-latency service obtains the channel through contention. The legacy stations may be STAs that do not support IEEE 802.11be but support IEEE 802.11ax.

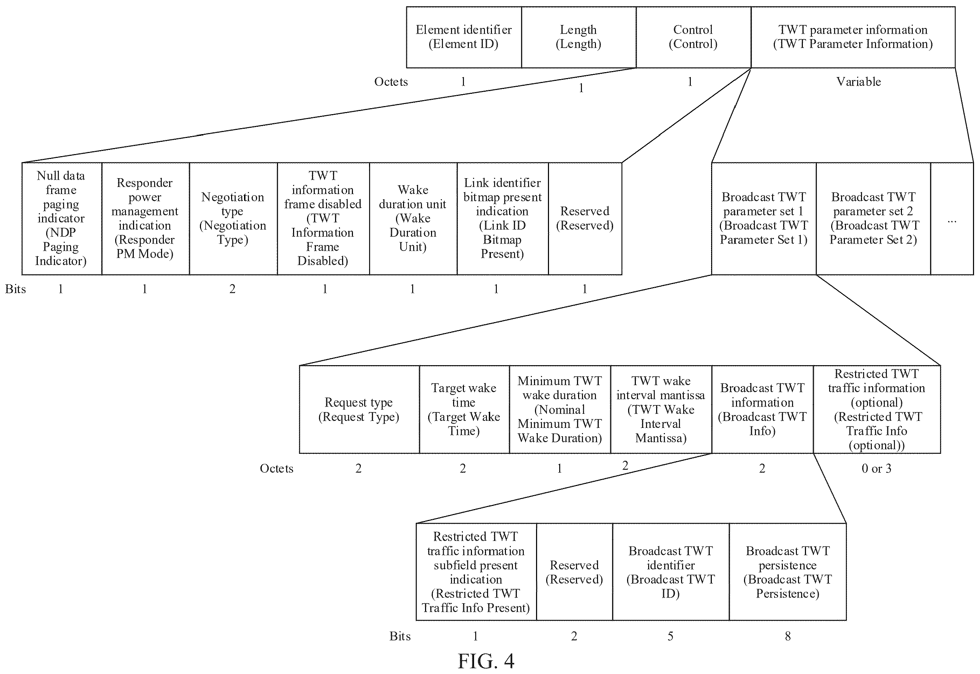

Currently, R-TWT information is indicated in a TWT element field. As shown in FIG. 4, a TWT element structure includes the following fields: element identifier (Element ID), length (Length), control (Control), and TWT parameter information (TWT Parameter Information).

The control field includes the following content: null data frame paging indicator (NDP Paging Indicator), responder power management indication (Responder PM Mode), negotiation type (Negotiation Type), TWT information frame disabled (TWT Information Frame Disabled), wake duration unit (Wake Duration Unit), link identifier bitmap present indication (Link ID Bitmap Present), and reserved (Reserved).

The TWT parameter information includes a plurality of broadcast TWT parameter sets (Broadcast TWT Parameter Sets), and each broadcast TWT parameter set includes the following content: request type (Request Type), target wake time (Target Wake Time), minimum TWT wake duration (Nominal Minimum TWT Wake Duration), TWT wake interval mantissa (TWT Wake Interval Mantissa), broadcast TWT information (Broadcast TWT Info), and restricted TWT traffic information (optional) (Restricted TWT Traffic Info (optional)).

The broadcast TWT information includes the following content: restricted TWT traffic information subfield present indication (Restricted TWT Traffic Info Present), reserved (Reserved), broadcast TWT identifier (Broadcast TWT ID), and broadcast TWT persistence (Broadcast TWT Persistence).

A broadcast TWT recommendation subfield (Broadcast TWT Recommendation) in a request type field (Request Type) in each broadcast TWT parameter set indicates a TWT type specified by the broadcast TWT parameter set, and a value 4 of the broadcast TWT recommendation subfield indicates that the broadcast TWT parameter set corresponds to one R-TWT. If one broadcast TWT parameter set corresponds to one R-TWT, a broadcast TWT information subfield (Broadcast TWT Info) in a TWT element field includes a one-bit R-TWT traffic information subfield present indication subfield (Restricted TWT Traffic Info Present), and a value 1 of the bit indicates that the TWT element field includes an R-TWT traffic information subfield (Restricted TWT Traffic Info) shown in the figure, and a value 0 indicates that the TWT element field does not include the R-TWT traffic information subfield (Restricted TWT Traffic Info) shown in the figure. A broadcast TWT identifier (Broadcast TWT ID) subfield indicates an identifier of a TWT group.

Specific meanings of the foregoing information are not limited in this application. For details, refer to descriptions in the IEEE 802.11 series protocols.

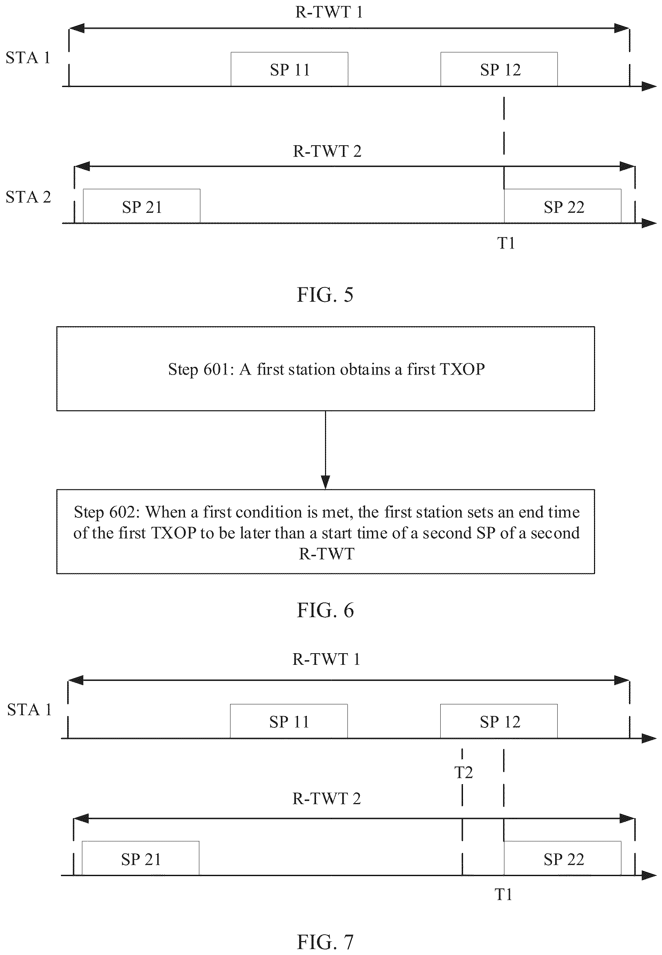

It can be learned from the foregoing description that, in the R-TWT, if R-TWTOptionlmplemented of the EHT STA is set to true (true), the EHT STA needs to end the TXOP of the EHT STA before the start time of the R-TWT SP, which increases a transmission latency of a service. For example, as shown in FIG. 5, an R-TWT 1 and an R-TWT 2 are established by a same AP, the STA 1 and the STA 2 are both stations associated with the AP, a STA 1 is a member of the R-TWT 1, and a STA 2 is a member of the R-TWT 2.

If the STA 1 obtains, through contention, a TXOP in an SP 12 of the R-TWT 1, and the TXOP overlaps with a start time T1 of an SP 22 of the R-TWT 2, the STA 1 needs to end the TXOP before the time T1. However, because the STA 1 is transmitting a service in the SP 12 of the R-TWT 1, terminating the service that is being transmitted in this case increases a latency of the STA 1, but also requires the STA 1 to subsequently contend again for a TXOP to continue to transmit service data that has not been transmitted. Therefore, a contention conflict arises, and system efficiency is affected.

Similarly, if the AP obtains the TXOP in the SP 12 of the R-TWT 1 through contention, the TXOP also needs to be ended before the time T1. As a result, the service latency increases. Therefore, this application provides a method to reduce a transmission latency of a service. Details are described below.

It may be understood that a specific structure of an execution body of the method provided in embodiments of this application is not particularly limited in this application, and may be applied to an AP or a module in an AP, or may be applied to a STA or a module in a STA, provided that a program that records code of the method provided in embodiments of this application can be run to perform communication according to the method provided in embodiments of this application.

FIG. 6 is a schematic flowchart of a communication method according to an embodiment of this application. The method includes the following steps.

Step 601: A first station obtains a first TXOP.

How the first station obtains the first TXOP is not limited in this application. If the first station obtains the first TXOP, the first station is a holder of the first TXOP.

In an implementation, the first station is a non-AP EHT STA. For example, the first station is a non-AP EHT STA with dot11R-TWTOptionImplemented (dot11RestrictedTWTOptionlmplemented) set to true. Alternatively, the first station is a non-AP EHT STA that supports an R-TWT.

In an implementation, before step 601, an access point associated with the first station, or an access point corresponding to a transmitted BSSID in a multiple BSSID to which an access point associated with the first station belongs, may indicate one or more R-TWT service periods (Service Periods, SPs) by using a beacon (Beacon) frame or a probe response (Probe Response) frame. The plurality of R-TWT SPs may belong to one R-TWT, or may belong to different R-TWTs. For example, the access point associated with the first station, or the access point corresponding to the transmitted BSSID in the multiple BSSID to which the access point associated with the first station belongs, may indicate a first SP of a first R-TWT by using the beacon frame or the probe response frame, and may further indicate a second SP of a second R-TWT. The first R-TWT and the second R-TWT may be located on a same channel.

Step 602: When a first condition is met, the first station sets an end time of the first TXOP to be later than a start time of the second SP of the second R-TWT.

That the end time of the first TXOP is later than the start time of the second SP of the second R-TWT may indicate that the end time of the first TXOP is located after the start time of the second SP of the second R-TWT, or that the start time of the second SP of the second R-TWT is located in the first TXOP.

Regardless of whether the first condition is met, the first station can transmit data in the first TXOP before the start time of the second SP of the second R-TWT.

In an implementation, when the first condition is not met, the first station sets the end time of the first TXOP to be earlier than the start time of the second SP of the second R-TWT.

That the end time of the first TXOP is earlier than the start time of the second SP of the second R-TWT may indicate that the end time of the first TXOP is located before the start time of the second SP of the second R-TWT, or that the first TXOP is ended before the start time of the second SP of the second R-TWT.

In an implementation, the first condition includes: The first station is a member of the first R-TWT, the first TXOP is located in the first SP of the first R-TWT, the start time of the second SP of the second R-TWT is located in the first SP of the first R-TWT, and a remaining portion of the first TXOP located after the start time of the second SP is used to transmit an uplink frame of an R-TWT uplink (uplink, UL) traffic identifier (Traffic Identifier, TID) of the first R-TWT.

The first R-TWT and the second R-TWT are both active (active) R-TWTs. The first R-TWT and the second R-TWT are released by the access point associated with the first station. Alternatively, the first R-TWT and the second R-TWT are released by the access point corresponding to the transmitted (transmitted) basic service set identifier (Basic Service Set Identifier, BSSID). The access point corresponding to the transmitted BSSID and the access point associated with the first station belong to the same multiple BSSID (multiple BSSID). The foregoing description may alternatively be replaced with the following: The first R-TWT and the second R-TWT are released by the access point corresponding to the transmitted BSSID in the multiple BSSID to which the access point associated with the first station belongs.

For example, as shown in FIG. 7, an R-TWT 1 and an R-TWT 2 are established by a same AP, and the AP is an access point associated with a STA 1, or the AP is an access point corresponding to a transmitted BSSID in a multiple BSSID to which an access point associated with a STA 1 belongs. An SP 11 and an SP 12 are SPs of the R-TWT 1; an SP 21 and an SP 22 are SPs of the R-TWT 2; a start time T1 of the SP 22 of the R-TWT 2 is located in the SP 12 of the R-TWT 1, and the STA 1 is a non-AP EHT STA with dot11RestrictedTWTOptionImplemented set to true. If the STA 1 obtains, through contention, a TXOP in the SP 12 of the R-TWT 1, the following two cases may exist:
Case 1: If the STA 1 is a member of the R-TWT 1, and a remaining portion of the TXOP located after the start time of the SP 22 of the R-TWT 2 is used to transmit an uplink frame of an R-TWT uplink TID of the R-TWT 1, the STA 1 continues to transmit data within the time of the TXOP after the start time of the SP 22 of the R-TWT 2, and does not need to end the TXOP before the start time of the SP 22 of the R-TWT 2.

Case 2: If the STA 1 is not a member of the R-TWT 1, or a remaining portion of the TXOP located after the start time of the SP 22 of the R-TWT 2 is not used to transmit an uplink frame of an R-TWT uplink TID of the R-TWT 1, the STA 1 ends the TXOP before the start time of the SP 22 of the R-TWT 2.

According to the method provided in this application, for a STA with dot11 Restricted TWT Option Implemented set to true and serving as a TXOP holder, when the first condition is not met, it should be ensured that the TXOP is ended before a start time of an active R-TWT SP released by the AP associated with the STA or the AP corresponding to the transmitted BSSID in the multiple BSSID set to which the AP associated with the STA belongs. For the STA with dot11 Restricted TWT Option Implemented set to true and serving as a TXOP holder, when the first condition is met, that is, "the TXOP is located in the first SP of the first R-TWT, the STA is a member of the first R-TWT, the first SP of the first R-TWT overlaps with the start time of the second SP of the second R-TWT, and the remaining portion of the TXOP located after the start time of the second SP of the second R-TWT is used to transmit the UL frame of the R-TWT-UL TID of the first R-TWT", the STA does not need to end the TXOP before the start time of the second SP of the second R-TWT, and the STA may transmit the UL frame of the R-TWT-UL TID of the first R-TWT in the remaining portion of the TXOP located after the start time of the second SP of the second R-TWT. The first R-TWT and the second R-TWT are released by the AP associated with the STA or the AP corresponding to the transmitted BSSID in the multiple BSSID set to which the AP associated with the STA belongs.

According to the method provided in this application, for a non-AP EHT STA with dot11RestrictedTWTOptionImplemented set to true and serving as a TXOP holder, it should be ensured that the TXOP is ended before a start time of any active R-TWT SP advertised by the AP associated with the non-AP EHT STA or the AP corresponding to the transmitted BSSID in the multiple BSSID set to which the AP associated with the non-AP EHT STA belongs, as in section 35.8.3 (R-TWT announcement) of IEEE 802.11be. The non-AP EHT STA does not need to end the TXOP before the start time of the active R-TWT SP unless the following condition is met: The non-AP EHT STA is a member of another R-TWT, an SP of the another R-TWT overlaps with the start time of the active R-TWT SP, and the remaining portion of the TXOP is used to send uplink frames of R-TWT UL TID(s) of the another R-TWT.

According to the method provided in this application, in a process in which the first station obtains the first TXOP in the first SP of the first R-TWT and transmits service data by using the first TXOP, if the start time of the second SP of the second R-TWT is located in the first SP, and the first station is a member of the first R-TWT, and the remaining portion of the first TXOP located after the start time of the second SP of the second R-TWT is used to transmit the uplink frame of the R-TWT uplink TID of the first R-TWT, the first station does not need to end the first TXOP (that is, stop transmitting the service data) before the start time of the second SP. Therefore, impact on a service transmitted by the first station can be avoided, a service latency of the first station is reduced, a low-latency service is guaranteed better, and system efficiency is improved.

This application further provides a method, to avoid deferring service transmission before service transmission. Details are described below.

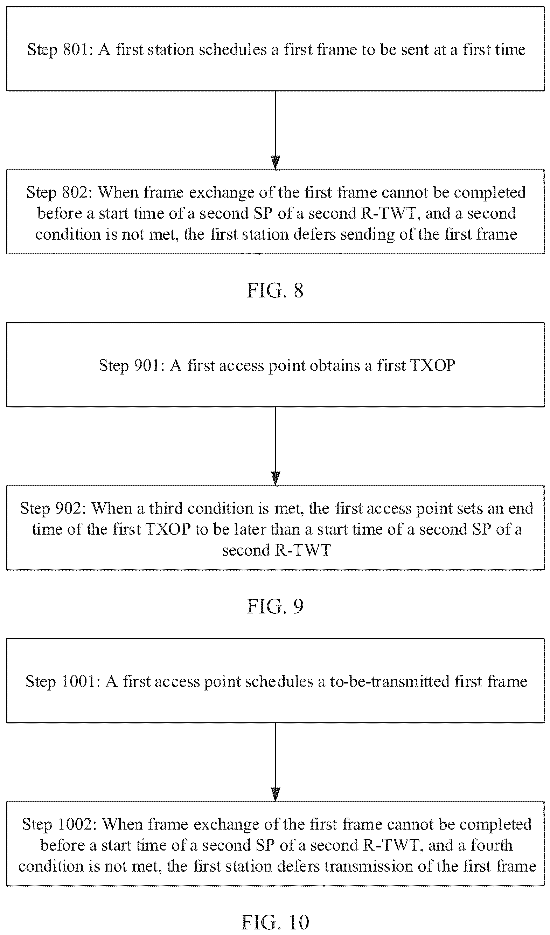

FIG. 8 is a schematic flowchart of a communication method according to an embodiment of this application. The method includes the following steps.

Step 801: A first station schedules a to-be-sent first frame.

How the first station schedules the to-be-sent first frame is not limited in this application. The first station may schedule the first frame to be sent at a first time, and the first time may be determined by the first station.

In an implementation, before scheduling the first frame, the first station has not obtained a TXOP. For example, a backoff counter value of the first station is 0, but no data has been sent yet. In another implementation, the first station has obtained a TXOP before scheduling the first frame.

In an implementation, the first station is a non-AP EHT STA. For example, the first station is a non-AP EHT STA with dot11RestrictedTWTOptionImplemented set to true. Alternatively, the first station is a non-AP EHT STA that supports an R-TWT.

In an implementation, before step 801, an access point associated with the first station, or an access point corresponding to a transmitted BSSID in a multiple BSSID to which an access point associated with the first station belongs, may indicate one or more R-TWT service periods (Service Periods, SPs) by using a beacon frame or a probe response frame. The plurality of R-TWT SPs may belong to one R-TWT, or may belong to different R-TWTs.

Step 802: When frame exchange of the first frame cannot be completed before a start time of a second SP of a second R-TWT, and a second condition is not met, the first station defers sending of the first frame.

In an implementation, the second condition includes: The first station is a member of a first R-TWT, the first time is located in a first service period SP of the first R-TWT, the start time of the second SP is located in the first SP, and the first frame is an uplink frame of an R-TWT uplink traffic identifier of the first R-TWT.

If duration between the first time and the start time of the second SP is greater than or equal to first duration, the frame exchange of the first frame can be completed before the start time of the second SP of the second R-TWT. If duration between the first time and the start time of the second SP is less than first duration, the frame exchange of the first frame cannot be completed before the start time of the second SP of the second R-TWT. The first duration may be duration required for transmitting the first frame and a response frame to the first frame.

The first R-TWT and the second R-TWT are both active R-TWTs. The first R-TWT and the second R-TWT are released by the access point associated with the first station. Alternatively, the first R-TWT and the second R-TWT are released by the access point corresponding to the transmitted BSSID. The access point corresponding to the transmitted BSSID and the access point associated with the first station belong to the same multiple BSSID. The foregoing description may alternatively be replaced with the following: The first R-TWT and the second R-TWT are released by the access point corresponding to the transmitted BSSID in the multiple BSSID to which the access point associated with the first station belongs.

In an implementation, when the first station defers sending of the first frame, if the first station has not obtained the TXOP, the first station may further select, by using a current variable CW[AC], a random backoff count value to continue to contend for a channel. If the first station has obtained the TXOP, the first station may further end the TXOP. The variable CW[AC] is a parameter, and the variable CW[AC] is initialized to a parameter value CWmin[AC]. When a backoff procedure is invoked, the backoff counter is set to a randomly selected random backoff count value. The random backoff count value is uniformly distributed within a range of 0 to CW[AC].

In an implementation, when the frame exchange of the first frame cannot be completed before the start time of the second SP of the second R-TWT, and the second condition is not met, the first station sends the first frame.

In another implementation, step 802 may be alternatively replaced with the following step: When the second condition is met, the first station sends the first frame.

Although the frame exchange may not be completed from the first time to the start time of the second SP of the second R-TWT when the second condition is met, the first station does not need to defer transmission of the first frame. Therefore, impact on a service transmitted by the first station can be avoided, a service latency of the first station is reduced, a low-latency service is guaranteed better, and system efficiency is improved.

In a possible implementation, when the second condition is not met, and a fifth condition is met, the first station sends the first frame. The fifth condition includes: The frame exchange of the first frame can be completed before the start time of the second SP of the second R-TWT, the first time is located in the first service period SP of the first R-TWT, and the start time of the second SP is located in the first SP.

In a possible implementation, when the second condition is not met and the fifth condition is not met, the first station defers sending of the first frame.

For example, with reference to FIG. 7, if the STA 1 schedules a first frame to be sent at a first time T2, the following several cases may exist:
Case 1: If the STA 1 is a member of the R-TWT 1, and T2 is located in the SP 12 of the R-TWT 1, and the first frame is an uplink frame of an R-TWT uplink TID of the R-TWT 1, the STA 1 sends the first frame at the first time T2.

Case 2: If frame exchange of the first frame can be completed before the start time T1 of the SP 22 of the R-TWT 2, the STA 1 sends the first frame at the first time T2.

Case 3: If frame exchange of the first frame cannot be completed before the start time T1 of the SP 22 of the R-TWT 2 and the STA 1 is not a member of the R-TWT 1, or frame exchange of the first frame cannot be completed before the start time T1 of the SP 22 of the R-TWT 2 and T2 is not located in the SP 12 of the R-TWT 1, or frame exchange of the first frame cannot be completed before the start time T1 of the SP 22 of the R-TWT 2 and the first frame is not an uplink frame of an R-TWT uplink TID of the R-TWT 1, the STA 1 defers sending of the first frame.

According to the method provided in this application, before starting to transmit the first frame, the first station with dot11RestrictedTWTOptionImplemented set to true checks whether there is enough time to complete the frame exchange before the start time of the second SP of the second R-TWT. Specifically, the first time for transmitting the first frame is located in the first service period SP of the first R-TWT, and the start time of the second SP of the second R-TWT is located in the first service period SP of the first R-TWT. In an implementation, if there is not enough time to complete the frame exchange, but the first station is not a member of the first R-TWT, or the first time for transmitting the first frame is not located in the first SP of the first R-TWT (the start time of the second SP is located in the first SP), or the first frame is not an uplink frame of the R-TWT uplink TID of the first R-TWT, the first station defers transmission of the first frame by using the current CW[AC] to select a random backoff count (without advancing to a next value of CW[AC]), or the first station ends the current TXOP.

In another implementation, if there is not enough time to complete the frame exchange, but the first station is a member of the first R-TWT, and the first time for transmitting the first frame is located in the first SP of the first R-TWT (the start time of the second SP is located in the first SP), and the first frame is an uplink frame of the R-TWT uplink TID of the first R-TWT, the first station transmits the first frame at the first time.

According to the method provided in this application, before starting transmission of any physical layer protocol data unit (Physical Protocol Data Unit, PPDU), a non-AP EHT STA with dot11RestrictedTWTOptionImplemented set to true should check whether there is enough time to complete frame exchange before the start of an R-TWT SP, and if there is not enough time, the non-AP EHT STA should defer transmission by selecting a random backoff count (without advancing to a next value of CW[AC]) by using a current CW[AC]. The non-AP EHT STA does not need to defer transmission of the PPDU unless the following condition is met: The non-AP EHT STA is a member of another R-TWT, an SP of the another R-TWT overlaps with a start time of an active R-TWT SP, and a TXOP is used to send UL frames of R-TWT UL TID(s) of the another R-TWT. A quality of service (quality of service, QoS) short retry counter [AC] (QSRC[AC]) for a media access control (media access control, MAC) service data unit (MAC service data unit, MSDU) or an aggregation MSDU (Aggregation MSDU, A-MSDU) is not affected.

According to the method provided in this application, before transmitting the first frame at the first time, if the frame exchange of the first frame cannot be completed before the start time of the second SP of the second R-TWT, and the second condition is not met, the first station defers transmission of the first frame. Therefore, impact on the service transmitted in the second SP of the second R-TWT can be avoided, the low-latency service is guaranteed better, and system efficiency is improved.

The method provided in this application may also be applicable to an access point. The following describes the method by using the access point as an execution body.

FIG. 9 is a schematic flowchart of a communication method according to an embodiment of this application. The method includes the following steps.

Step 901: A first access point obtains a first TXOP.

How the first access point obtains the first TXOP is not limited in this application. If the first access point obtains the first TXOP, the first access point is a holder of the first TXOP.

In an implementation, the first access point is an EHT AP. For example, the first access point is an EHT AP with dot11R-TWTOptionImplemented (dot11RestrictedTWTOptionImplemented) set to true. Alternatively, the first access point is an EHT AP that supports an R-TWT.

Step 902: When a third condition is met, the first access point sets an end time of the first TXOP to be later than a start time of a second SP of a second R-TWT.

That the end time of the first TXOP is later than the start time of the second SP of the second R-TWT may indicate that the end time of the first TXOP is located after the start time of the second SP of the second R-TWT, or that the start time of the second SP of the second R-TWT is located in the first TXOP.

Regardless of whether the third condition is met, the first access point can transmit data in the first TXOP before the start time of the second SP of the second R-TWT.

In an implementation, when the third condition is not met, the first access point sets the end time of the first TXOP to be earlier than the start time of the second SP of the second R-TWT.

That the end time of the first TXOP is earlier than the start time of the second SP of the second R-TWT may indicate that the end time of the first TXOP is located before the start time of the second SP of the second R-TWT, or that the first TXOP is ended before the start time of the second SP of the second R-TWT.

In an implementation, if the third condition is not met, the first access point ends the first TXOP before the start time of the second SP of the second R-TWT.

In an implementation, the third condition includes: The first TXOP is located in a first SP of a first R-TWT, the start time of the second SP of the second R-TWT is located in the first SP of the first R-TWT, and a remaining portion of the first TXOP located after the start time of the second SP is used to transmit a downlink frame of an R-TWT downlink traffic identifier of the first R-TWT or request an uplink frame of an R-TWT uplink traffic identifier of the first R-TWT, or a remaining portion of the first TXOP located after the start time of the second SP is used to transmit a downlink frame of an R-TWT downlink traffic identifier of the second R-TWT or request an uplink frame of an R-TWT uplink traffic identifier of the second R-TWT.

The first R-TWT and the second R-TWT are both active R-TWTs; and the first R-TWT and the second R-TWT are released by the first access point or an access point corresponding to a transmitted BSSID, and the access point corresponding to the transmitted BSSID and the first access point belong to a same multiple basic service set identifier BSSID. The foregoing description may alternatively be replaced with the following: The first R-TWT and the second R-TWT are released by the access point corresponding to the transmitted BSSID in the multiple BSSID to which the first access point belongs.

For example, with reference to FIG. 7, the AP is an EHT AP with dot11RestrictedTWTOptionImplemented set to true. If the AP obtains, through contention, the TXOP in the SP 12 of the R-TWT 1, the following two cases may exist:
Case 1: If the remaining portion of the TXOP located after the start time of the SP 22 of the R-TWT 2 is used to transmit a downlink frame of an R-TWT downlink traffic identifier of the first R-TWT or request an uplink frame of an R-TWT uplink traffic identifier of the first R-TWT, or the remaining portion of the TXOP located after the start time of the SP 22 of the R-TWT 2 is used to transmit a downlink frame of an R-TWT downlink traffic identifier of the R-TWT 2 or request an uplink frame of an R-TWT uplink traffic identifier of the R-TWT 2, the AP continues to transmit data within the time of the TXOP after the start time of the SP 22 of the R-TWT 2, and does not need to end the TXOP before the start time of the SP 22 of the R-TWT 2.

Case 2: If the remaining portion of the TXOP located after the start time of the SP 22 of the R-TWT 2 is neither used to transmit a downlink frame of an R-TWT downlink traffic identifier of the first R-TWT or request an uplink frame of an R-TWT uplink traffic identifier of the first R-TWT, nor used to transmit a downlink frame of an R-TWT downlink traffic identifier of the R-TWT 2 or request an uplink frame of an R-TWT uplink traffic identifier of the R-TWT 2, the AP ends the TXOP before the start time of the SP 22 of the R-TWT 2.

According to the method provided in this application, for the AP with dot11 Restricted TWT Option Implemented set to true and serving as a TXOP holder, when the fourth condition is not met, it should be ensured that the TXOP is ended before the start time of the SP of the active R-TWT released by the AP. For the AP with dot11 Restricted TWT Option Implemented set to true and serving as a TXOP holder, when the TXOP is located in the first SP of the first R-TWT, and the start time of the second SP of the second R-TWT is located in the first SP of the first R-TWT, if the remaining portion of the TXOP located after the start time of the second SP is used to transmit a downlink frame of an R-TWT downlink traffic identifier of the first R-TWT or request an uplink frame of an R-TWT uplink traffic identifier of the first R-TWT, or the remaining portion of the TXOP located after the start time of the second SP is used to transmit a downlink frame of an R-TWT downlink traffic identifier of the second R-TWT or request an uplink frame of an R-TWT uplink traffic identifier of the second R-TWT, the AP does not need to end the TXOP before the start time of the second SP of the second R-TWT, and the AP can continue to perform data transmission in the remaining portion of the TXOP located after the start time of the second SP of the second R-TWT.

According to the method provided in this application, for an EHT AP with dot11RestrictedTWTOptionImplemented set to true and serving as a TXOP holder, it should be ensured that the TXOP is ended before a start time of any active R-TWT SP, as specified in section 35.8.3 (R-TWT announcement) of the IEEE 802.11be standard. The EHT AP does not need to end the TXOP before the start time of the active R-TWT SP unless either of the following conditions is met:
- the remaining portion of the TXOP located in the active R-TWT SP is used to transmit DL frames of R-TWT DL TID(s) or request UL frames of R-TWT UL TID(s); and
- an SP of another R-TWT overlaps with the start time of the active R-TWT SP, and the remaining portion of the TXOP located in the active R-TWT SP is used to transfer downlink frames of R-TWT DL TID(s) of the another R-TWT or request uplink frames of R-TWT UL TID(s) of the another R-TWT.

According to the method provided in this application, in a process in which the first access point obtains the first TXOP in the first SP of the first R-TWT and transmits service data by using the first TXOP, if the start time of the second SP of the second R-TWT is located in the first SP and the fourth condition is met, the first access point does not need to end the first TXOP (that is, stop transmitting the service data) before the start time of the second SP. Therefore, impact on a service transmitted by the first access point can be avoided, a service latency of the first access point is reduced, a low-latency service is guaranteed better, and system efficiency is improved.

FIG. 10 is a schematic flowchart of a communication method according to an embodiment of this application. The method includes the following steps.

Step 1001: A first access point schedules a to-be-transmitted first frame.

How the first access point schedules the first frame is not limited in this application. The first access point may schedule the first frame to be transmitted at a first time.

In an implementation, the first access point is an EHT AP. For example, the first access point is an EHT AP with dot11R-TWTOptionImplemented (dot11RestrictedTWTOptionImplemented) set to true. Alternatively, the first access point is an EHT AP that supports an R-TWT.

Step 1002: When frame exchange of the first frame cannot be completed before a start time of a second SP of a second R-TWT, and a fourth condition is not met, the first station defers transmission of the first frame.

In an implementation, the fourth condition includes: The first time is located in a first service period SP of a first R-TWT, the start time of the second SP of the second R-TWT is located in the first SP of the first R-TWT, and the first frame is an uplink frame of an R-TWT uplink traffic identifier of the first R-TWT, or the first frame is a downlink frame of an R-TWT downlink traffic identifier of the first R-TWT, or the first frame is a downlink frame of an R-TWT downlink traffic identifier of the second R-TWT, or the first frame is an uplink frame of an R-TWT uplink traffic identifier of the second R-TWT.

If duration between the first time and the start time of the second SP is greater than or equal to first duration, the frame exchange of the first frame can be completed before the start time of the second SP of the second R-TWT. If duration between the first time and the start time of the second SP is less than first duration, the frame exchange of the first frame cannot be completed before the start time of the second SP of the second R-TWT. The first duration may be duration required for transmitting the first frame and a response frame to the first frame.

The first R-TWT and the second R-TWT are both active R-TWTs; and the first R-TWT and the second R-TWT are released by the first access point or an access point corresponding to a transmitted BSSID, and the access point corresponding to the transmitted BSSID and the first access point belong to a same multiple basic service set identifier BSSID. The foregoing description may alternatively be replaced with the following: The first R-TWT and the second R-TWT are released by the access point corresponding to the transmitted BSSID in the multiple BSSID to which the first access point belongs.

In an implementation, when the first access point defers transmission of the first frame, if the first access point has not obtained a TXOP, the first access point may further select, by using a current variable CW[AC], a random backoff count value to continue to contend for a channel. If the first access point has obtained a TXOP, a first station may further end the TXOP. The variable CW[AC] is an integer.

In an implementation, when the frame exchange of the first frame cannot be completed before the start time of the second SP of the second R-TWT, and the fourth condition is met, the first access point transmits the first frame.

In another implementation, step 1002 may alternatively be replaced with the following step: When the fourth condition is met, the first access point sends the first frame.

Although the frame exchange may not be completed from the first time to the start time of the second SP of the second R-TWT when the fourth condition is met, the first access point does not need to defer transmission of the first frame. Therefore, impact on a service transmitted by the first station can be avoided, a service latency of the first access point is reduced, a low-latency service is guaranteed better, and system efficiency is improved.

In a possible implementation, when the fourth condition is not met, and a sixth condition is met, the first access point sends the first frame. The sixth condition includes: The frame exchange of the first frame can be completed before the start time of the second SP of the second R-TWT, the first time is located in the first service period SP of the first R-TWT, and the start time of the second SP is located in the first SP.

In a possible implementation, when the fourth condition is not met and the sixth condition is not met, the first access point defers sending of the first frame.

For example, with reference to FIG. 7, if the AP schedules the first frame to be sent or requested at the first time T2, and T2 is located in the SP 12 of the R-TWT 1, the following several cases may exist:
Case 1: If the first frame is an uplink frame of an R-TWT uplink traffic identifier of the first R-TWT, or the first frame is a downlink frame of an R-TWT downlink traffic identifier of the first R-TWT, or the first frame is a downlink frame of an R-TWT downlink traffic identifier of the second R-TWT, or the first frame is an uplink frame of an R-TWT uplink traffic identifier of the second R-TWT, the AP sends or requests the first frame at the first time T2.

Case 2: If the frame exchange of the first frame can be completed before the start time T1 of the SP 22 of the R-TWT 2, the AP transmits the first frame at the first time T2.

Case 3: If the frame exchange of the first frame cannot be completed before the start time T1 of the SP 22 of the R-TWT 2, and the first frame is not an uplink frame of an R-TWT uplink traffic identifier of the first R-TWT, or the first frame is not a downlink frame of an R-TWT downlink traffic identifier of the first R-TWT, or the first frame is not a downlink frame of an R-TWT downlink traffic identifier of the second R-TWT, or the first frame is not an uplink frame of an R-TWT uplink traffic identifier of the second R-TWT, the AP defers transmission of the first frame.

According to the method provided in this application, before starting to transmit the first frame, the first access point with dot11RestrictedTWTOptionImplemented set to true checks whether there is enough time to complete the frame exchange before the start time of the second SP of the second R-TWT. Specifically, the first time for transmitting the first frame is located in the first SP of the first R-TWT, and the start time of the second SP of the second R-TWT is located in the first service period SP of the first R-TWT. In an implementation, if there is not enough time to complete the frame exchange, but the first frame is not an uplink frame of an R-TWT uplink traffic identifier of the first R-TWT, and the first frame is not a downlink frame of an R-TWT downlink traffic identifier of the first R-TWT, and the first frame is not a downlink frame of an R-TWT downlink traffic identifier of the second R-TWT, and the first frame is not an uplink frame of an R-TWT uplink traffic identifier of the second R-TWT, the first access point defers transmission of the first frame by using the current CW[AC] to select a random backoff count (without advancing to a next value of CW[AC]), or the first access point ends the current TXOP.

In another implementation, if there is not enough time to complete the frame exchange, but the first frame is an uplink frame of an R-TWT uplink traffic identifier of the first R-TWT, or the first frame is a downlink frame of an R-TWT downlink traffic identifier of the first R-TWT, or the first frame is a downlink frame of an R-TWT downlink traffic identifier of the second R-TWT, or the first frame is an uplink frame of an R-TWT uplink traffic identifier of the second R-TWT, the first access point transmits the first frame at the first time.

According to the method provided in this application, before starting transmission of any PPDU, the EHT AP with dot11RestrictedTWTOptionImplemented set to true should check whether there is enough time to complete the frame exchange before the start of an active R-TWT SP, and if there is not enough time, the EHT AP should defer transmission by selecting a random backoff count (without advancing to the next value of CW[AC]) by using the current CW[AC]. The EHT AP does not need to defer transmission unless the following condition is met: An SP of another R-TWT overlaps with the start time of the active R-TWT SP, and the TXOP is used to transmit a downlink frame of an R-TWT DL TID of the another R-TWT or request an uplink frame of an R-TWT UL TID of the another R-TWT. A QSRC[AC] for an MSDU or an A-MSDU is not affected.

According to the method provided in this application, before transmitting the first frame at the first time, the first access point can transmit the first frame as long as the fifth condition or the sixth condition is met. Although the frame exchange may not be completed from the first time to the start time of the second SP of the second R-TWT when the fifth condition is met, the first access point does not need to defer transmission of the first frame. Therefore, impact on a service transmitted by the first station can be avoided, a service latency of the first access point is reduced, a low-latency service is guaranteed better, and system efficiency is improved.

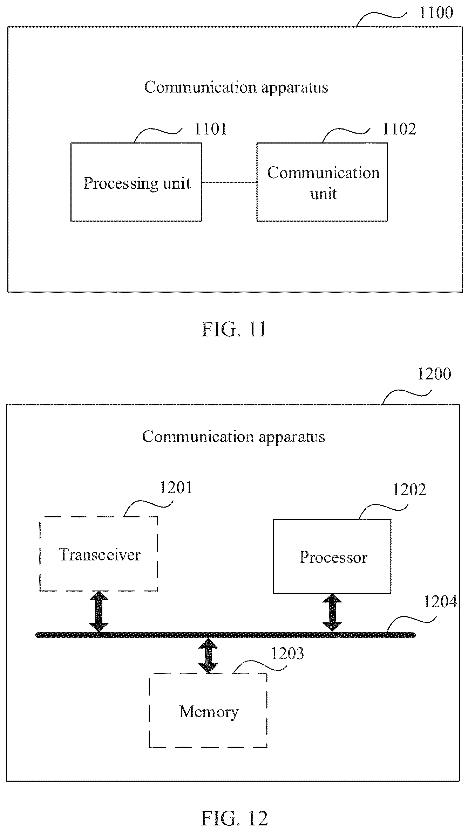

Based on the foregoing embodiments, an embodiment of this application further provides a communication apparatus. As shown in FIG. 11, the communication apparatus 1100 may include a processing unit 1101, and the processing unit 1101 is configured to control and manage an action of the communication apparatus 1100. Optionally, the communication apparatus 1100 may further include a communication unit 1102. The communication unit 1102 is configured for the communication apparatus 1100 to perform communication transmission, for example, receive information (a frame, a message, or data) or send information (a frame, a message, or data). The processing unit 1101 may further control an operation performed by the communication unit 1102.

For example, the communication apparatus 1100 may be the first station in the foregoing embodiments, or may be a processor, a chip, a chip system, a functional module, or the like in the first station. Alternatively, the communication apparatus 1100 may be the first access point in the foregoing embodiments, or may be a processor, a chip, a chip system, a functional module, or the like in the first access point.

Optionally, the following uses an example in which the communication apparatus 1100 includes the processing unit 1101 and the communication unit 1102 for description.

In an embodiment, the processing unit is configured to obtain a first transmission opportunity TXOP; and
the communication unit is configured to: when a first condition is met, set an end time of the first TXOP to be later than a start time of a second service period SP of a second restricted target wakeup time R-TWT, where
the first condition includes: a first station is a member of a first R-TWT, the first TXOP is located in a first SP of the first R-TWT, the start time of the second SP of the second R-TWT is located in the first SP of the first R-TWT, and a remaining portion of the first TXOP located after the start time of the second SP is used to transmit an uplink frame of an R-TWT uplink traffic identifier of the first R-TWT, where
the first R-TWT and the second R-TWT are released by an access point associated with the first station or an access point corresponding to a transmitted BSSID, and the access point corresponding to the transmitted BSSID and the access point associated with the first station belong to a same multiple basic service set identifier BSSID.

In a possible implementation, the processing unit is further configured to: when the first condition is not met, set the end time of the first TXOP to be earlier than the start time of the second SP of the second R-TWT.

In an embodiment, the processing unit is configured to schedule a to-be-sent first frame; and
the communication unit is configured to: when frame exchange of the first frame cannot be completed before a start time of a second SP of a second R-TWT, and a second condition is not met, defer sending of the first frame, where
the second condition includes: a first station is a member of a first R-TWT, a first time is located in a first service period SP of the first R-TWT, the start time of the second SP is located in the first SP, and the first frame is an uplink frame of an R-TWT uplink traffic identifier of the first R-TWT, where
the first R-TWT and the second R-TWT are released by an access point associated with the first station or an access point corresponding to a transmitted BSSID, and the access point corresponding to the transmitted BSSID and the access point associated with the first station belong to a same multiple basic service set identifier BSSID.

In a possible implementation, the communication unit is further configured to: when the frame exchange of the first frame cannot be completed before the start time of the second SP of the second R-TWT, and the second condition is met, send the first frame.

In an embodiment, the processing unit is configured to obtain a first transmission opportunity TXOP; and
the communication unit is configured to: when a third condition is met, set an end time of the first TXOP to be later than a start time of a second service period SP of a second restricted target wakeup time R-TWT, where
the third condition includes: the first TXOP is located in a first SP of a first R-TWT, the start time of the second SP of the second R-TWT is located in the first SP of the first R-TWT, and a remaining portion of the first TXOP located after the start time of the second SP is used to transmit a downlink frame of an R-TWT downlink traffic identifier of the first R-TWT or request an uplink frame of an R-TWT uplink traffic identifier of the first R-TWT, where
the first R-TWT and the second R-TWT are released by a first access point or an access point corresponding to a transmitted BSSID, and the access point corresponding to the transmitted BSSID and the first access point belong to a same multiple basic service set identifier BSSID.

In a possible implementation, the processing unit is further configured to: when the third condition is not met, the first access point sets the end time of the first TXOP to be earlier than the start time of the second SP of the second R-TWT.

In an embodiment, the processing unit is configured to schedule a to-be-transmitted first frame; and
the communication unit is configured to: when frame exchange of the first frame cannot be completed before a start time of a second SP of a second R-TWT, and a fourth condition is not met, defer transmission of the first frame, where
the fourth condition includes: a first time is located in a first service period SP of a first R-TWT, the start time of the second SP of the second R-TWT is located in the first SP of the first R-TWT, and the first frame is an uplink frame of an R-TWT uplink traffic identifier of the first R-TWT, or the first frame is a downlink frame of an R-TWT downlink traffic identifier of the first R-TWT, where
the first R-TWT and the second R-TWT are released by a first access point or an access point corresponding to a transmitted BSSID, and the access point corresponding to the transmitted BSSID and the first access point belong to a same multiple basic service set identifier BSSID.

In a possible implementation, the communication unit is further configured to: when the frame exchange of the first frame cannot be completed before the start time of the second SP of the second R-TWT, and the fourth condition is met, transmit the first frame.

Based on the foregoing embodiments, an embodiment of this application further provides a communication apparatus. As shown in FIG. 12, the communication apparatus 1200 may include a processor 1202. Optionally, the communication apparatus 1200 may further include a transceiver 1201 and/or a memory 1203. The memory 1203 may be disposed inside the communication apparatus 1200, or may be disposed outside the communication apparatus 1200. The processor 1202 may control the transceiver 1201 to receive and send information, a message, data, or the like.

Specifically, the processor 1202 may be a central processing unit (central processing unit, CPU), a network processor (network processor, NP), or a combination of a CPU and an NP. The processor 1202 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field-programmable gate array, FPGA), a generic array logic (generic array logic, GAL), or any combination thereof.

The transceiver 1201, the processor 1202, and the memory 1203 are connected to each other. Optionally, the transceiver 1201, the processor 1202, and the memory 1203 are connected to each other through a bus 1204. The bus 1204 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used to represent the bus in FIG. 12, but this does not mean that there is only one bus or only one type of bus.

In an optional implementation, the memory 1203 is configured to store a program and the like. Specifically, the program may include program code. The program code includes computer operation instructions. The memory 1203 may include a RAM, and may further include a non-volatile memory (non-volatile memory), for example, one or more disk memories. The processor 1202 executes an application program stored in the memory 1203, to implement the foregoing functions to implement functions of the communication apparatus 1200.

For example, the communication apparatus 1200 may be the first station in the foregoing embodiments, or may be the first access point in the foregoing embodiments.

In an embodiment, when the communication apparatus 1200 implements a function of the first station, the processor 1202 may implement an operation performed by the first station. Optionally, when the communication apparatus 1200 includes the transceiver 1201 and the processor 1202, the transceiver 1201 may implement receiving and sending operations performed by the first station, and the processor 1202 may implement other operations performed by the first station than the receiving and sending operations. Specifically, for related specific descriptions, refer to related descriptions in the foregoing embodiments. Details are not described herein again.

In another embodiment, when the communication apparatus 1200 implements a function of the first access point, the processor 1202 may implement an operation performed by the first access point. Optionally, when the communication apparatus 1200 includes the transceiver 1201 and the processor 1202, the transceiver 1201 may implement receiving and sending operations performed by the first access point, and the processor 1202 may implement other operations performed by the first access point than the receiving and sending operations. Specifically, for related specific descriptions, refer to related descriptions in the foregoing embodiments. Details are not described herein again.

Based on the foregoing embodiments, an embodiment of this application provides a communication system. The communication system may include the first station, the first access point, and the like in the foregoing embodiments.

An embodiment of this application further provides a computer-readable storage medium. The computer-readable storage medium is configured to store a computer program. When the computer program is executed by a computer, the computer may implement the communication methods provided in the foregoing method embodiments.

An embodiment of this application further provides a computer program product. The computer program product is configured to store a computer program. When the computer program is executed by a computer, the computer may implement the communication methods provided in the foregoing method embodiments.

An embodiment of this application further provides a chip, including a processor. The processor is coupled to a memory, and is configured to invoke a program in the memory, so that the chip implements the communication methods provided in the foregoing method embodiments.

An embodiment of this application further provides a chip. The chip is coupled to a memory, and the chip is configured to implement the communication methods provided in the foregoing method embodiments.

The method steps in embodiments of this application may be implemented by hardware, or may be implemented by the processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to the processor, so that the processor can read information from the storage medium or write information into the storage medium. Certainly, the storage medium may alternatively be a component of the processor. The processor and the storage medium may be located in an ASIC. In addition, the ASIC may be located in a base station or a terminal. Certainly, the processor and the storage medium may exist in a base station or terminal as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, user equipment, or another programmable apparatus. The computer program or the instructions may be stored in a computer-readable storage medium or may be transmitted from one computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape, or may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a magnetic disk memory, an optical memory, and the like) that include computer-usable program code.

This application is described with reference to the flowcharts and/or the block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the other programmable data processing device generate an apparatus for implementing a specific function in one or more procedures in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clear that a person skilled in the art can make various changes and variations to this application without departing from the scope of this application. Therefore, this application is intended to cover these modifications and variations of this application provided that they fall within the protection scope defined by the following claims and equivalent technologies thereof.

## Claims

1. A communication method, comprising:
obtaining, by a first station, a first transmission opportunity TXOP; and
when a first condition is met, setting, by the first station, an end time of the first TXOP to be later than a start time of a second service period SP of a second restricted target wakeup time R-TWT, wherein
the first condition comprises:
the first station is a member of a first R-TWT, the first TXOP is located in a first SP of the first R-TWT, the start time of the second SP of the second R-TWT is located in the first SP of the first R-TWT, and a remaining portion of the first TXOP located after the start time of the second SP is used to transmit an uplink frame of an R-TWT uplink traffic identifier of the first R-TWT, wherein
the first R-TWT and the second R-TWT are released by an access point associated with the first station or an access point corresponding to a transmitted BSSID, and the access point corresponding to the transmitted BSSID and the access point associated with the first station belong to a same multiple basic service set identifier BSSID.

2. The method according to claim 1, wherein when the first condition is not met, the first station sets the end time of the first TXOP to be earlier than the start time of the second SP of the second R-TWT.

3. A communication method, comprising:
scheduling, by a first station, a to-be-sent first frame; and
when frame exchange of the first frame is incapable of being completed before a start time of a second SP of a second R-TWT, and a second condition is not met, deferring, by the first station, sending of the first frame, wherein
the second condition comprises:
the first station is a member of a first R-TWT, a first time is located in a first service period SP of the first R-TWT, the start time of the second SP is located in the first SP, and the first frame is an uplink frame of an R-TWT uplink traffic identifier of the first R-TWT, wherein
the first R-TWT and the second R-TWT are released by an access point associated with the first station or an access point corresponding to a transmitted BSSID, and the access point corresponding to the transmitted BSSID and the access point associated with the first station belong to a same multiple basic service set identifier BSSID.

4. The method according to claim 3, wherein when the frame exchange of the first frame is incapable of being completed before the start time of the second SP of the second R-TWT, and the second condition is met, the first station sends the first frame.

5. A communication method, comprising:
obtaining, by a first access point, a first transmission opportunity TXOP; and
when a third condition is met, setting, by the first access point, an end time of the first TXOP to be later than a start time of a second service period SP of a second restricted target wakeup time R-TWT, wherein
the third condition comprises:
the first TXOP is located in a first SP of a first R-TWT, the start time of the second SP of the second R-TWT is located in the first SP of the first R-TWT, and a remaining portion of the first TXOP located after the start time of the second SP is used to transmit a downlink frame of an R-TWT downlink traffic identifier of the first R-TWT or request an uplink frame of an R-TWT uplink traffic identifier of the first R-TWT, wherein
the first R-TWT and the second R-TWT are released by the first access point or an access point corresponding to a transmitted BSSID, and the access point corresponding to the transmitted BSSID and the first access point belong to a same multiple basic service set identifier BSSID.

6. The method according to claim 5, wherein when the third condition is not met, the first access point sets the end time of the first TXOP to be earlier than the start time of the second SP of the second R-TWT.

7. A communication method, comprising:
scheduling, by a first access point, a to-be-transmitted first frame; and
when frame exchange of the first frame is incapable of being completed before a start time of a second SP of a second R-TWT, and a fourth condition is not met, deferring, by the first station, transmission of the first frame, wherein
the fourth condition comprises:
a first time is located in a first service period SP of a first R-TWT, the start time of the second SP of the second R-TWT is located in the first SP of the first R-TWT, and the first frame is an uplink frame of an R-TWT uplink traffic identifier of the first R-TWT, or the first frame is a downlink frame of an R-TWT downlink traffic identifier of the first R-TWT, wherein
the first R-TWT and the second R-TWT are released by the first access point or an access point corresponding to a transmitted BSSID, and the access point corresponding to the transmitted BSSID and the first access point belong to a same multiple basic service set identifier BSSID.

8. The method according to claim 7, wherein when the frame exchange of the first frame is incapable of being completed before the start time of the second SP of the second R-TWT, and the fourth condition is met, the first access point transmits the first frame.

9. A communication apparatus, comprising:
a processing unit, configured to obtain a first transmission opportunity TXOP; and
a communication unit, configured to: when a first condition is met, set an end time of the first TXOP to be later than a start time of a second service period SP of a second restricted target wakeup time R-TWT, wherein
the first condition comprises:
a first station is a member of a first R-TWT, the first TXOP is located in a first SP of the first R-TWT, the start time of the second SP of the second R-TWT is located in the first SP of the first R-TWT, and a remaining portion of the first TXOP located after the start time of the second SP is used to transmit an uplink frame of an R-TWT uplink traffic identifier of the first R-TWT, wherein
the first R-TWT and the second R-TWT are released by an access point associated with the first station or an access point corresponding to a transmitted BSSID, and the access point corresponding to the transmitted BSSID and the access point associated with the first station belong to a same multiple basic service set identifier BSSID.

10. The apparatus according to claim 9, wherein the processing unit is further configured to:
when the first condition is not met, set the end time of the first TXOP to be earlier than the start time of the second SP of the second R-TWT.

11. A communication apparatus, comprising:
a processing unit, configured to schedule a to-be-sent first frame; and
a communication unit, configured to: when frame exchange of the first frame is incapable of being completed before a start time of a second SP of a second R-TWT, and a second condition is not met, defer sending of the first frame, wherein
the second condition comprises:
a first station is a member of a first R-TWT, a first time is located in a first service period SP of the first R-TWT, the start time of the second SP is located in the first SP, and the first frame is an uplink frame of an R-TWT uplink traffic identifier of the first R-TWT, wherein
the first R-TWT and the second R-TWT are released by an access point associated with the first station or an access point corresponding to a transmitted BSSID, and the access point corresponding to the transmitted BSSID and the access point associated with the first station belong to a same multiple basic service set identifier BSSID.

12. The apparatus according to claim 11, wherein the communication unit is further configured to:
when the frame exchange of the first frame is incapable of being completed before the start time of the second SP of the second R-TWT, and the second condition is met, send the first frame.

13. A communication apparatus, comprising:
a processing unit, configured to obtain a first transmission opportunity TXOP; and
a communication unit, configured to: when a third condition is met, set an end time of the first TXOP to be later than a start time of a second service period SP of a second restricted target wakeup time R-TWT, wherein
the third condition comprises:
the first TXOP is located in a first SP of a first R-TWT, the start time of the second SP of the second R-TWT is located in the first SP of the first R-TWT, and a remaining portion of the first TXOP located after the start time of the second SP is used to transmit a downlink frame of an R-TWT downlink traffic identifier of the first R-TWT or request an uplink frame of an R-TWT uplink traffic identifier of the first R-TWT, wherein
the first R-TWT and the second R-TWT are released by a first access point or an access point corresponding to a transmitted BSSID, and the access point corresponding to the transmitted BSSID and the first access point belong to a same multiple basic service set identifier BSSID.

14. The apparatus according to claim 13, wherein the processing unit is further configured to:
when the third condition is not met, the first access point sets the end time of the first TXOP to be earlier than the start time of the second SP of the second R-TWT.

15. A communication apparatus, comprising:
a processing unit, configured to schedule a to-be-transmitted first frame; and
a communication unit, configured to: when frame exchange of the first frame is incapable of being completed before a start time of a second SP of a second R-TWT, and a fourth condition is not met, defer transmission of the first frame, wherein
the fourth condition comprises:
the first time is located in a first service period SP of the first R-TWT, the start time of the second SP of the second R-TWT is located in the first SP of the first R-TWT, and the first frame is an uplink frame of an R-TWT uplink traffic identifier of the first R-TWT, or the first frame is a downlink frame of an R-TWT downlink traffic identifier of the first R-TWT, wherein
the first R-TWT and the second R-TWT are released by the first access point or an access point corresponding to a transmitted BSSID, and the access point corresponding to the transmitted BSSID and the first access point belong to a same multiple basic service set identifier BSSID.

16. The apparatus according to claim 15, wherein the communication unit is further configured to:
when the frame exchange of the first frame is incapable of being completed before the start time of the second SP of the second R-TWT, and the fourth condition is met, transmit the first frame.

17. A communication apparatus, comprising a processor, wherein
the processor is configured to invoke computer instructions in a memory, to perform the method according to any one of claims 1 to 8.

18. A computer-readable storage medium, wherein the computer-readable storage medium stores computer-executable instructions, and when the computer-executable instructions are invoked by a computer, the method according to any one of claims 1 to 8 is performed.

19. A computer program product, comprising instructions, wherein when the instructions are run on a computer, the method according to any one of claims 1 to 8 is performed.

20. A chip, wherein the chip is coupled to a memory, and configured to read and execute program instructions stored in the memory, to implement the method according to any one of claims 1 to 8.

21. A communication system, comprising a first station and a first access point, wherein the first station is configured to implement the method according to any one of claims 1 to 4, and the first access point is configured to implement the method according to any one of claims 5 to 8.
